# EUROPEAN PATENT SPECIFICATION

(11) **EP 4 105 522 B1**
(45) Date of publication and mention of the grant of the patent: **09.04.2025**
(21) Application number: 22179262.5
(22) Date of filing: 15.06.2022
(51) Int. Cl.: F16J 13/12, B65D 25/48, F16J 13/24, F16K 17/04, F16K 35/10

(54) **PORT LOCKED BY PRESSURE RELIEF VALVE**
DURCH DRUCKENTLASTUNGSVENTIL VERRIEGELTER ANSCHLUSS
ORIFICE VERROUILLÉ PAR UNE SOUPAPE DE SURPRESSION

(30) Priority: 15.06.2021 US 202117348385
(43) Date of publication of application: 21.12.2022
(73) Proprietor: Goodrich Corporation, Charlotte, NC 28217-4578 (US)
(72) Inventor: CHING, Nathaniel, Hartville, OH (US); HU, Jin, Hudson, OH (US); ROACH, Kevin Edward, Stow, OH (US)
(74) Representative: Dehns

(56) References cited:
- DE-A1- 2 055 409
- DE-A1- 2 211 388
- US-A- 4 465 202
- US-A- 4 741 260

## Description

### BACKGROUND

Exemplary embodiments relate to the art of pressurized containers, and more specifically, to a fail-safe device associated with a removable cap of a pressurized container.

A cap may be used to seal an opening of a pressurized container. When the container is highly pressurized, it will be nearly impossible to remove the cap without a leverage enhancing tool until the pressure of the container is equalized with the ambient atmosphere. Further, if a cap is removed from an opening while the container is pressurized, the pressure acting on the cap can cause the cap to explosively separate from the container. In addition, the pressurized fluid within the container may escape therefrom at a high temperature and/or velocity. Accordingly, accessing the interior of a container while the container is pressurized can result in potential injury to the operator or damage to an article surrounding the container. Containers with caps are disclosed in DE 20 55 409 A1, US 4 465 202 A and DE 22 11 388 A1.

### BRIEF DESCRIPTION

According to one aspect, a container assembly is provided as defined by claim 1.

In addition to one or more of the features described above, in embodiments the pressure relief valve is mounted to the housing at a position adjacent to the opening.

In further embodiments an axis of the pressure relief valve is oriented at an angle to an axis of the opening.

In further embodiments the axis of the pressure relief valve is perpendicular to the axis of the opening.

In further embodiments when the movable member is in the first position, the internal compartment is pressurized, and when the movable member is in the second position, the internal compartment is vented.

In further embodiments the engagement feature includes a groove extending about at least a portion of a periphery of the cap.

In further embodiments the engagement feature has a similar size and shape to a portion of the movable member with which the engagement feature cooperates.

In further embodiments the cap further comprises at least one vent hole, the at least one vent hole being arranged in fluid communication with the engagement feature.

In further embodiments when the movable member is in the first position, rotational movement of the cap relative to the opening is restricted.

In further embodiments the pressure relief valve further comprises a valve body having a first end and a second end, the first end being arranged adjacent to the cap, wherein the movable member extends through the first end in both the first position and the second position.

In further embodiments the engagement feature is located at a pressurized portion of the cap.

In further embodiments the engagement feature is located at a non-pressurized portion of the cap.

According to another aspect, a method of removing a cap from a container is provided as defined by claim 10.

In further embodiments equalizing the pressure within the container and the ambient pressure further comprises providing a fluid flow between the pressure relief valve and the container.

In further embodiments equalizing the pressure within the container and the ambient pressure further comprises venting fluid from the container through the pressure relief valve when the container is pressurized.

In further embodiments venting fluid from the container through the pressure relief valve when the container is pressurized further comprises venting fluid from the container through at least one vent hole formed in the cap, the at least one vent hole being arranged in fluid communication with an end of the pressure relief valve.

In further embodiments the at least one vent hole is formed at the engagement feature.

In further embodiments unlocking the cap relative to the container further comprises separating a movable member of the pressure relief valve from an engagement feature of the cap.

In further embodiments separating the cap from the container further comprises rotating the cap to threadably decouple the cap from the container.

In further embodiments separating the cap from the container further comprises rotating and axially translating the cap to decouple the cap from the container.

### BRIEF DESCRIPTION OF THE DRAWINGS

The following descriptions should not be considered limiting in any way. With reference to the accompanying drawings, like elements are numbered alike:
FIG. 1 is a schematic diagram of a pressurized container according to an embodiment;
FIG. 2 is a detailed cross-sectional view of an access assembly for use with the pressurized container according to an embodiment;
FIG. 3 is another detailed cross-sectional view of the access assembly of FIG. 2 according to an embodiment;
FIG. 4 is a schematic diagram of a pressure relief valve according to an embodiment;
FIG. 5 is a detailed cross-sectional view of a portion of an access assembly for use with the pressurized container according to an embodiment;
FIG. 6 is another detailed cross-sectional view of the access assembly according to an embodiment; and
FIG. 7 is a perspective view of a portion of an access assembly of FIG. 6 according to an embodiment.

### DETAILED DESCRIPTION

A detailed description of one or more embodiments of the disclosed apparatus and method are presented herein by way of exemplification and not limitation with reference to the Figures.

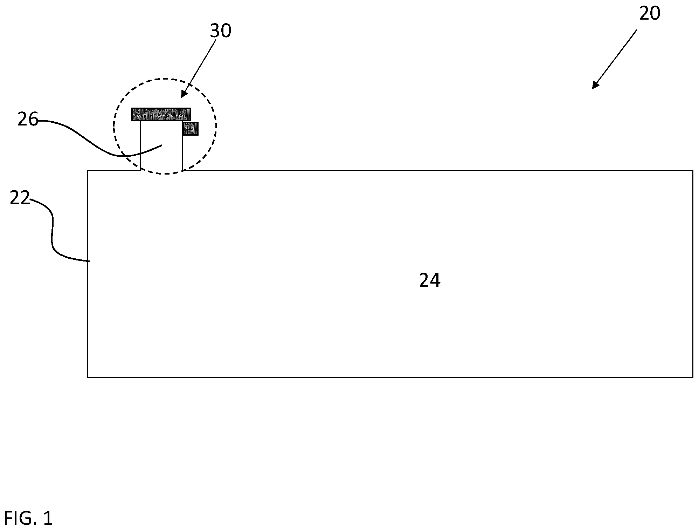

With reference now to FIG. 1, an example of a container 20 suitable for retaining a medium under pressure is illustrated. As shown, the container 20 has a container body including a housing 22 that defines a generally hollow internal compartment 24. At least one port or opening 26 is formed in the housing 22 and is arranged in fluid communication with the internal compartment 24. The opening 26 may be selectively sealed to retain the contents within the internal compartment of the container 20. In an embodiment, the container 20 is a holding tank associated with a potable water system or waste water system of an aircraft. The holding tank 20 may be pressurized at any time when the aircraft is operational, including when the aircraft is on the ground. During normal operation, the pressure acting on a holding tank 20 of a potable water system is a positive pressure. However, in other applications, the holding tank 20 may experience a positive pressure or negative pressure during different operating conditions. Accordingly, any container 20 suitable for use in a pressurized application, including both positive pressure and negative pressure applications, are also within the scope of the invention as defined by the claims.

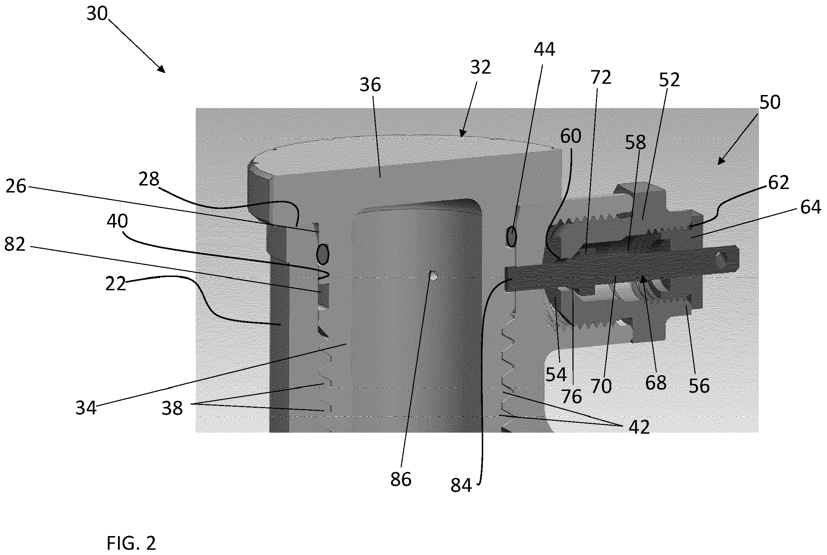

An example of an assembly 30 suitable to selectively close an opening, such as opening 26, of the container 20 is illustrated in more detail in FIGS. 2 -3 and 5-7. In the illustrated, non-limiting embodiment, the assembly 30 includes a cap 32 having an axially extending body 34. As shown, all or at least a portion of the axial body 34 of the cap 32 is receivable within the opening 26.

In the illustrated, non-limiting embodiment, the cap 32 further includes a radially outwardly extending flange 36 that, for example, has a diameter greater than the inner diameter of the opening 26 and, in some embodiments, is greater than or equal to an outer diameter of the housing 22 adjacent to the opening 26. Although the flange 36 is shown as being located at an end of the body 34, embodiments where the flange 36 is arranged at a central portion of the body 34 are also contemplated herein. In embodiments where the cap is removed by hand, the flange 36 may provide an area for a user to easily grasp and rotate the cap 32. As shown, the flange 36 may be positionable adjacent to or in contact with an upper surface 28 of the housing 22 surrounding the opening 26 when the body 34 is received within the opening 26. However, in other embodiments, the flange may be offset from the surface 28 when the body 34 is fully seated within the opening 26. Further, embodiments where the cap 32 does not include a flange 36 are also contemplated herein.

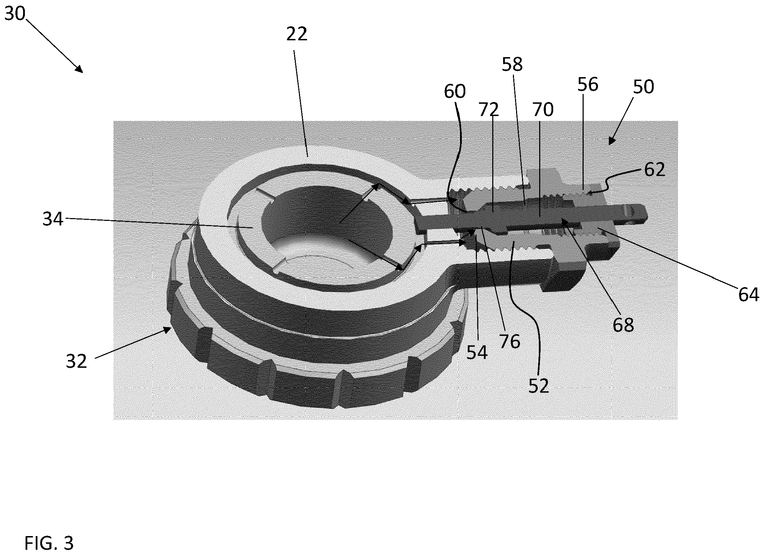

The cap 32 is removably connectable to the housing 22 to close and seal the opening 26. In an embodiment, best shown in FIGS. 2 and 3, a plurality of first threads 38 is formed at the inner surface 40 of the housing 22 and a plurality of second threads 42 is formed about an outer periphery of at least a portion of the body 34. Accordingly, during installation of the cap 32 within the opening 26, the cap 32 is rotated to threadably couple to the housing 22 of the container 20. One or more parameters of the threads 38, 42 may be selected such that the engagement between the first threads 38 and the second threads 42 is sufficient to maintain the cap 32 in position within the opening 26, even when the container 20 is positively or negatively pressurized.

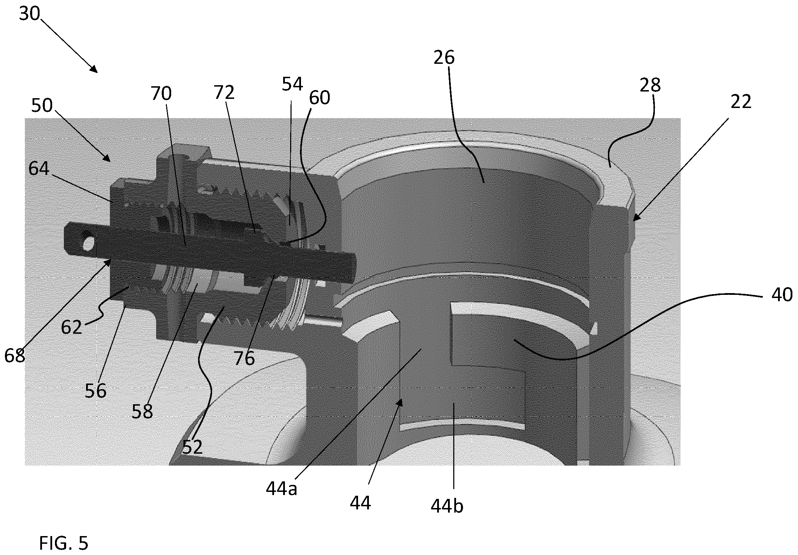

With reference now to FIGS. 5-7, a cap 32 and housing 22 connectable via another coupling mechanism is illustrated. As shown, the cap 32 is retained within the opening 26 of the housing 22 via a bayonet connection. At least one receiving groove 44 is formed within the inner surface 40 of the housing 22 within the opening 26. The at least one receiving groove 44 has an axial component 44a and a circumferential component 44b. In the illustrated, non-limiting embodiment, the at least one receiving groove 44 is L-shaped. A locking feature 46 of the cap 32, such as a pin for example, is receivable within the one or more receiving grooves 44. In an embodiment, the pin 46 extends radially outwardly from an exterior surface of the axial body 34.

To install the cap 32 within the opening 26, each pin 46 is aligned with and slidably received within the axial component 44a of the receiving groove 44. The cap 32 is then rotated, thereby moving the pin 46 through the circumferential portion 44b of the receiving groove 44 to a position where axial movement of the cap 32 is restricted by one or more surfaces of the housing 22. In an embodiment, the cap 32 includes a boss 48 that may be used to rotate the cap 32 via a wrench or other suitable tool. The boss 48 may be arranged at a first end of the axial body 34, and may be arranged external to, or within the opening 26 when the cap 32 is mounted within the opening 26.

It should be understood that the threaded connection and the bayonet connection described herein are intended as an example only and that embodiments where the cap 32 is removably connected to the housing 22 via another suitable coupling mechanism are also within the scope of the disclosure. Further, embodiments where the body 34 of the cap 32 is receivable about the exterior of the housing 22, rather than within the opening 26, to close and seal the opening 26 are also contemplated herein.

The threaded connection and the bayonet connections illustrated and described herein are intended to take the primary pressure load. The engagement between the cap 32 and the housing 22 may be sufficient to form a seal therebetween. However, in other embodiments, another component may be used to form the seal. In an embodiment, an O-ring, gasket, or other flexible seal wraps about the periphery of the body 34 such that when the cap 32 is installed relative to the opening 26, the seal is configured to directly contact an adjacent surface of the housing 22, such as inner surface 40 for example, to form an air-tight seal between the body 34 and the housing 22. In other embodiments, cap 32 and housing 22 may have matching smooth surfaces to engage and seal without the addition of another part or material.

A pressure relief valve 50 is associated with the cap 32 to further restrict movement of the cap 32 relative to the opening 26 when the container 20 is pressurized. In the illustrated, non-limiting embodiment, the pressure relief valve 50 is mounted to the housing 22 adjacent to the cap 32. The pressure relief valve 50 may be permanently affixed to the housing 22, or alternatively, may be removably coupled therein. Although the pressure relief valve 50 is shown as being threadably coupled to the housing 22, embodiments where the pressure relief valve 50 is integral with the housing and/or embodiments where the pressure relief valve is mounted to the cap 32 via another suitable mechanism are also contemplated herein. Further, as shown, the axis of the pressure relief valve 50, as defined by movement of the movable member (to be described in more detail below), is oriented generally perpendicular to the axis of the opening 26 and the cap 32. However, in other embodiments, the axis of the pressure relief valve 50 may be oriented at another angle to the axis of the cap 32.

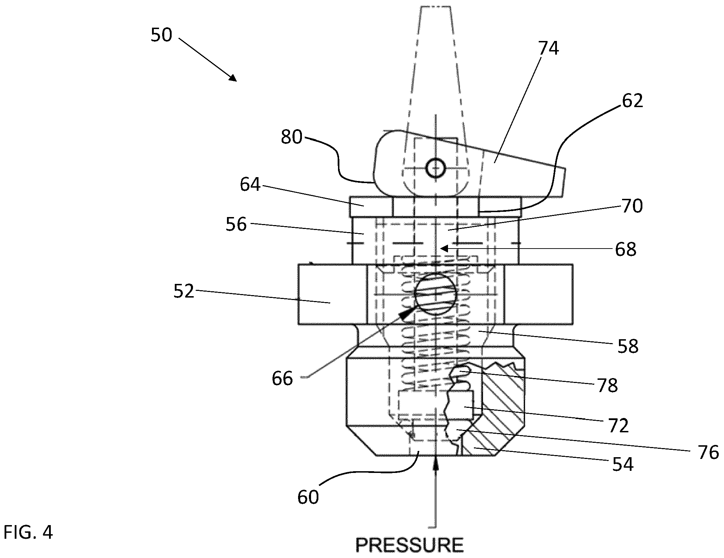

An example of a pressure relief valve 50 is shown in more detail in FIG. 4. As shown, the pressure relief valve 50 includes a valve body 52 having a first end 54 and a second end 56, and an internal chamber 58 extending between the first end 54 and the second end 56. The first end 54 and the second end 56 may each have an opening 60, 62 formed therein, and a valve cap 64 may be connected to the second end 56 of the valve body 52 to close and seal the opening 62 at the second end 56. The valve body 52 additionally includes at least one vent hole 66 for venting pressure through the pressure relief valve 50 to the atmosphere. In the illustrated, non-limiting embodiment, the pressure relief valve 50 includes two vent holes 66 that are evenly spaced about the periphery of the valve body 52. However, it should be understood that a pressure relief valve 50 having any suitable configuration of vent holes 66 is within the scope of the disclosure. Further, it should be understood that the total number, the size, and the position of the vent holes 66 may be selected based on the application and the total amount of fluid to be released through the valve and a desired time to release the pressure.

A movable member 68, also referred to as a valve member, is mounted within the chamber 58. The movable member 68 includes an elongated valve stem 70 and a disc or collar 72 mounted to a portion of the valve stem 70. In the illustrated, non-limiting embodiment, the disc 72 is arranged at a central portion of the valve stem 70. However, the disc 72 may be located at another portion of the valve stem 70, such as at an end thereof for example. A portion of the valve stem 70 is configured to extend through the valve cap 64, to the exterior of the valve body 52. As shown, a handle or lever 74 (see FIG. 4) for selectively operating or releasing the pressure relief valve 50 is connected to the external portion of the valve stem 70.

The movable member 68 is configured to translate between a first position in which the pressure relief valve 50 is normally closed, and a second position in which the pressure relief valve 50 is open. In the first position, a portion of the movable member 68 is arranged in position to substantially seal the opening 60 of the first end 54 of the valve body 52. When in the first position, the disc 72 itself may be used to seal the opening 60, or alternatively, a seal 76, such as an O-ring for example, mounted to the valve stem 70 and/or the disc 72 may seal the opening 60. In the second position, the disc 72 and/or seal 76 are spaced apart from the opening 60 by a distance. As a result, fluid is configured to flow through the opening 60 at the first end 54, into the chamber 58, and out to the ambient atmosphere via the one or more vent holes 66. It should be understood that for embodiments where the container is negatively pressurized (vacuum), when the valve 50 is opened, air will flow in the opposite direction, into the interior of the container 20 to equalize the pressure within the container 20 with the pressure of the ambient atmosphere.

A biasing member 78 (best shown in FIG. 4), such as a spring for example, is located within the chamber 58 and is operably coupled to the movable member 68. In an embodiment, the biasing member 78 is a coil spring mounted concentrically about the valve stem 70, extending between a surface of the valve cap 64 and a surface of the disc 72. A biasing force of the biasing member 78 is configured to bias the movable member 68 toward the opening 60 at the first end 54, thereby causing the pressure relief valve 50 to be normally closed.

Operation of the lever 74 is configured to transform the movable member 68 between the first position and the second position. In the illustrated, non-limiting embodiment, the lever 74 includes a cam surface 80 that is configured to engage an adjacent surface, such as of the valve cap 64 for example. Accordingly, as the lever 74 rotates about an axis from a first configuration to a second configuration, the camming action causes the movable member 68 to translate axially in a direction opposite the bias of the biasing member 78. The cam surface 80 of the lever 74 may be configured to hold the lever 74 in the second configuration, thereby holding the valve open. However, in other embodiments, other mechanisms may be used to hold the movable member 68 in the translated position such that the valve remains open. Further, as the lever 74 is rotated from the second configuration toward the first configuration, and the force opposing the biasing member 78 is removed, the movable member 68 is biased back to the first position. It should be understood that the pressure relief valve 50 illustrated and described herein is intended as an example only and that a pressure relief valve 50 having any suitable configuration is within the scope of the disclosure.

With continued reference to FIGS. 2, 3, and 6, in the illustrated, non-limiting embodiments, when the pressure relief valve 50 is in the sealed, first normal position, the movable member 68 of the pressure relief valve 50 extends through the first end 54 of the valve body 52 and is engaged with a portion of the cap 32. Accordingly, the movable member 68 "locks" the cap 32 in place within the opening 26 by restricting axial movement thereof. To unlock the cap, the movable member 68 is moved to the second position, such that the movable member 68 and the cap 32 are disengaged. Although the movable member 68 is illustrated as being engaged with the body 34 of the cap 32, it should be understood that embodiments where the movable member is engaged with the flange 36 of the cap 32 are also contemplated herein.

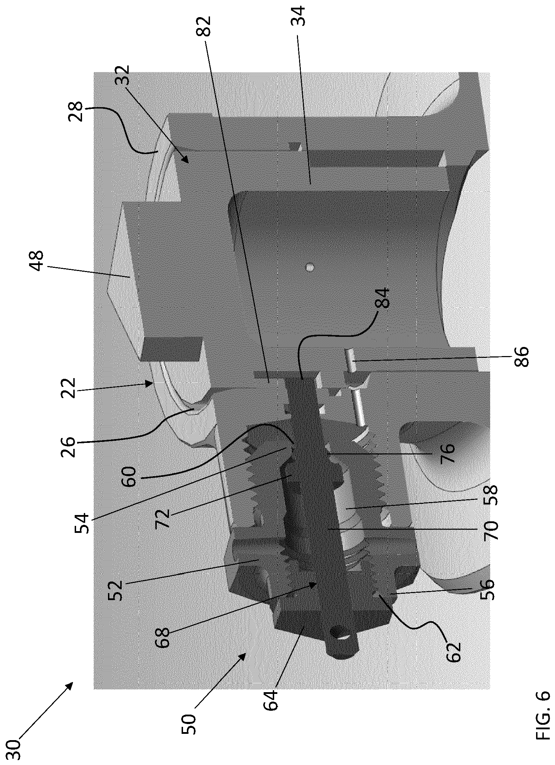

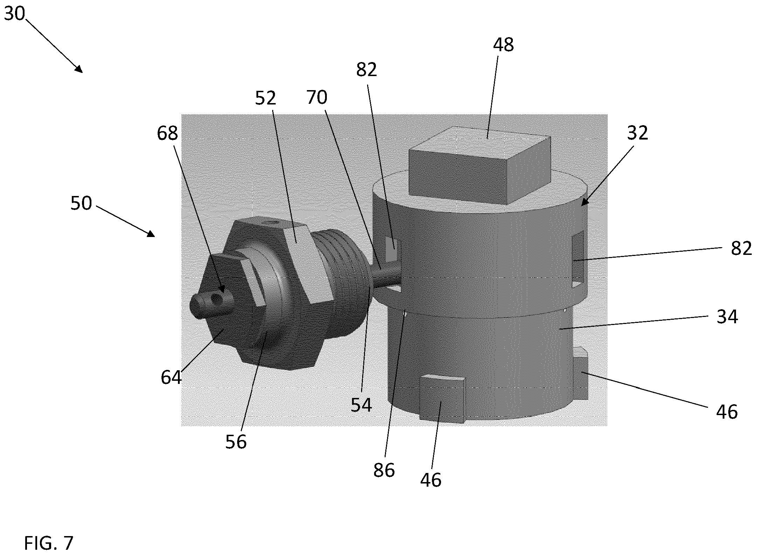

As shown, an engagement feature 82, such as a groove for example, is formed in a surface of the cap 32 and the distal end 84 of the movable member 68 is receivable therein. The engagement feature 82 may be located at either a pressurized portion of the cap 32 or at a non-pressurized portion of the cap 32. The engagement feature 82 may include one or more of an annular groove that extends about the entire periphery of the body 34, a groove that wraps about only a portion of the outer periphery of the body, an axial groove (see FIGS. 6 and 7), and a groove generally complementary in size and shape to the distal end 84 of the movable member 68. In embodiments where the engagement feature 82 is an annular groove or a groove that wraps about a portion of the outer periphery, the cap 32 is at least partially rotatable about its axis when the distal end 84 of the movable member 68 is received within the engagement feature 82. In embodiments where the engagement feature 82 is an axial groove, the cap 32 may be partially translatable along the cap's axis of rotation. However, in embodiments where the engagement feature 82 is a single groove complementary to the distal end 84 of the movable member 68, both axial and rotational movement of the cap 32 is prevented. Although the engagement feature 82 is illustrated and described as a groove formed in the surface of the body 34, it should be understood that any configuration where the distal end 84 of the movable member 68 cooperates with at least one of an engagement feature 82 of the cap 32 and the features connecting the cap 32 to the opening 26, such as threads 38/42 or bayonet connection 44/46, to restrict rotational and/or axial movement of the cap 32 is within the scope of the disclosure.

One or more vent holes 86 arranged in fluid communication with the interior of the container 20 are formed in the body 34 of the cap 32. In an embodiment, at least one vent hole 86 is axially aligned with the one or more engagement features 82 formed therein. Accordingly, when the pressure relief valve 50 is opened by moving the movable member 68 to the second position, fluid, such as pressurized air for example, is configured to flow from the internal compartment 24 of the container 20 to the engagement feature 82 via the at least one vent hole 86 and from the engagement feature 82 into the open first end 54 of the pressure relief valve 50 for release to the ambient atmosphere as previously described.

By restricting movement of the cap 32 using the movable member 68 of a pressure relief valve 50, the pressure relief valve 50 must be opened and pressure must be released from the container 20 prior to removing the cap 32 therefrom. Further, such an assembly provides a fail-safe measure without adding excess components or weight to the system.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A container assembly comprising:
a container body having a housing (22) defining an internal compartment (24) and an opening (26) connected to the internal compartment;
a cap (32) mounted to the housing about the opening, **characterized by** the cap having an axially extending body (34) receivable within the opening (26) and an engagement feature (82) formed within the axially extending body; and
a pressure relief valve (50) mounted to the housing and operably coupled with the internal compartment to vent fluid from the internal compartment, the pressure relief valve having a movable member (68) movable between a first position and a second position, wherein when the movable member is in the first position, the movable member is configured to cooperate with the engagement feature to restrict movement of the cap relative to the opening.

2. The container assembly of claim 1, wherein the pressure relief valve (50) is mounted to the housing (22) at a position adjacent to the opening (26).

3. The container assembly of claim 1 or 2, wherein an axis of the pressure relief valve (50) is oriented at an angle to an axis of the opening (26), or wherein the axis of the pressure relief valve is perpendicular to the axis of the opening.

4. The container assembly of any preceding claim, wherein when the movable member (68) is in the first position, the internal compartment (24) is pressurized, and when the movable member is in the second position, the internal compartment is vented.

5. The container assembly of any preceding claim, wherein the engagement feature (82) includes a groove (44) extending about at least a portion of a periphery of the cap (32), and/or wherein the engagement feature has a similar size and shape to a portion of the movable member with which the engagement feature cooperates.

6. The container assembly of any preceding claim, wherein the cap (32) further comprises at least one vent hole (86), the at least one vent hole being arranged in fluid communication with the engagement feature.

7. The container assembly of any preceding claim, wherein when the movable member (68) is in the first position, rotational movement of the cap (32) relative to the opening (26) is restricted.

8. The container assembly of any preceding claim, wherein the pressure relief valve (50) further comprises a valve body (52) having a first end and a second end, the first end being arranged adjacent to the cap (32), wherein the movable member extends through the first end in both the first position and the second position.

9. The container assembly of any preceding claim, wherein the engagement feature (68) is located at a pressurized portion of the cap (32), or wherein the engagement feature is located at a non-pressurized portion of the cap.

10. A method of removing a cap from a container of a container assembly as claimed in any preceding claim, comprising:
opening the pressure relief valve (50) arranged in fluid communication with the container when the container is pressurized;
equalizing a pressure within the container and an ambient pressure;
unlocking the cap (32) relative to the container; and
separating the cap from the container.

11. The method of claim 10, wherein equalizing the pressure within the container and the ambient pressure further comprises providing a fluid flow between the pressure relief valve and the container.

12. The method of claim 11, wherein equalizing the pressure within the container and the ambient pressure further comprises venting fluid from the container through the pressure relief valve (50) when the container is pressurized.

13. The method of claim 12, wherein venting fluid from the container through the pressure relief valve (50) when the container is pressurized further comprises venting fluid from the container through at least one vent hole (86) formed in the cap, the at least one vent hole being arranged in fluid communication with an end of the pressure relief valve, and optionally wherein the at least one vent hole is formed at the engagement feature.

14. The method of claim 10, 11, 12 or 13, wherein unlocking the cap (32) relative to the container further comprises separating a movable member (68) of the pressure relief valve from an engagement feature (82) of the cap.

15. The method of any of claims 10 to 14, wherein separating the cap (32) from the container further comprises rotating the cap to threadably decouple the cap from the container, or wherein separating the cap from the container further comprises rotating and axially translating the cap to decouple the cap from the container.

## Patentansprüche

1. Behälterbaugruppe, umfassend:
einen Behälterkörper, der ein Gehäuse (22) aufweist, das eine Innenkammer (24) und eine mit der Innenkammer verbundene Öffnung (26) definiert;
eine Kappe (32), die um die Öffnung herum an dem Gehäuse montiert ist, **dadurch gekennzeichnet, dass** die Kappe einen innerhalb der Öffnung (26) aufnehmbaren sich axial erstreckenden Körper (34) und ein innerhalb des sich axial erstreckenden Körpers ausgebildetes Eingriffsmerkmal (82) aufweist; und
ein Druckentlastungsventil (50), das an dem Gehäuse montiert und mit der Innenkammer wirkgekoppelt ist, um Fluid aus der Innenkammer abzulassen, wobei das Druckentlastungsventil ein bewegliches Element (68) aufweist, das zwischen einer ersten Position und einer zweiten Position beweglich ist, wobei das bewegliche Element zum Zusammenwirken mit dem Eingriffsmerkmal ausgelegt ist, wenn sich das bewegliche Element in der ersten Position befindet, um die Bewegung der Kappe relativ zu der Öffnung einzuschränken.

2. Behälterbaugruppe nach Anspruch 1, wobei das Druckentlastungsventil (50) an einer Position benachbart zu der Öffnung (26) an dem Gehäuse (22) montiert ist.

3. Behälterbaugruppe nach Anspruch 1 oder 2, wobei eine Achse des Druckentlastungsventils (50) in einem Winkel zu einer Achse der Öffnung (26) ausgerichtet ist oder wobei die Achse des Druckentlastungsventils senkrecht zu der Achse der Öffnung verläuft.

4. Behälterbaugruppe nach einem der vorhergehenden Ansprüche, wobei die Innenkammer (24) unter Druck steht, wenn sich das bewegliche Element (68) in der ersten Position befindet, und die Innenkammer entlüftet ist, wenn sich das bewegliche Element in der zweiten Position befindet.

5. Behälterbaugruppe nach einem der vorhergehenden Ansprüche, wobei das Eingriffsmerkmal (82) eine Nut (44) beinhaltet, die sich um mindestens einen Abschnitt eines Umfangs der Kappe (32) erstreckt, und/oder wobei das Eingriffsmerkmal eine ähnliche Größe und Form aufweist wie ein Abschnitt des beweglichen Elements, mit dem das Eingriffsmerkmal zusammenwirkt.

6. Behälterbaugruppe nach einem der vorhergehenden Ansprüche, wobei die Kappe (32) ferner mindestens ein Entlüftungsloch (86) umfasst, wobei das mindestens eine Entlüftungsloch in Fluidverbindung mit der Eingriffseinrichtung angeordnet ist.

7. Behälterbaugruppe nach einem der vorhergehenden Ansprüche, wobei eine Drehbewegung der Kappe (32) relativ zu der Öffnung (26) eingeschränkt ist, wenn sich das bewegliche Element (68) in der ersten Position befindet.

8. Behälterbaugruppe nach einem der vorhergehenden Ansprüche, wobei das Druckentlastungsventil (50) ferner einen Ventilkörper (52) umfasst, der ein erstes und ein zweites Ende aufweist, wobei das erste Ende benachbart zu der Kappe (32) angeordnet ist und wobei sich das bewegliche Element sowohl in der ersten als auch in der zweiten Position durch das erste Ende erstreckt.

9. Behälterbaugruppe nach einem der vorhergehenden Ansprüche, wobei sich das Eingriffsmerkmal (68) an einem unter Druck stehenden Abschnitt der Kappe (32) befindet oder wobei sich das Eingriffsmerkmal an einem nicht unter Druck stehenden Abschnitt der Kappe befindet.

10. Verfahren zum Entfernen einer Kappe von einem Behälter einer Behälterbaugruppe nach einem der vorhergehenden Ansprüche, umfassend:
Öffnen des in Fluidverbindung mit dem Behälter angeordneten Druckentlastungsventils (50), wenn der Behälter unter Druck steht;
Angleichen eines Drucks innerhalb des Behälters an einen Umgebungsdruck;
Entriegeln der Kappe (32) relativ zu dem Behälter; und
Trennen der Kappe von dem Behälter.

11. Verfahren nach Anspruch 10, wobei das Angleichen des Drucks innerhalb des Behälters an den Umgebungsdruck ferner Bereitstellen eines Fluidstroms zwischen dem Druckentlastungsventil und dem Behälter umfasst.

12. Verfahren nach Anspruch 11, wobei das Angleichen des Drucks innerhalb des Behälters an den Umgebungsdruck ferner Entlüften von Fluid aus dem Behälter durch das Druckentlastungsventil (50) umfasst, wenn der Behälter unter Druck steht.

13. Verfahren nach Anspruch 12, wobei das Entlüften von Fluid aus dem Behälter durch das Druckentlastungsventil (50), wenn der Behälter unter Druck steht, ferner Entlüften von Fluid aus dem Behälter durch mindestens ein in der Kappe ausgebildetes Entlüftungsloch (86) umfasst, wobei das mindestens eine Entlüftungsloch in Fluidverbindung mit einem Ende des Druckentlastungsventils angeordnet ist und wobei das mindestens eine Entlüftungsloch optional an dem Eingriffsmerkmal ausgebildet ist.

14. Verfahren nach Anspruch 10, 11, 12 oder 13, wobei das Entriegeln der Kappe (32) relativ zu dem Behälter ferner Trennen eines beweglichen Elements (68) des Druckentlastungsventils von einem Eingriffsmerkmal (82) der Kappe umfasst.

15. Verfahren nach einem der Ansprüche 10 bis 14, wobei das Trennen der Kappe (32) von dem Behälter ferner Drehen der Kappe umfasst, um die Kappe mittels Gewinde von dem Behälter zu entkoppeln, oder wobei das Trennen der Kappe vom Behälter ferner Drehen und axiales Verschieben der Kappe umfasst, um die Kappe von dem Behälter zu entkoppeln.

## Revendications

1. Ensemble récipient comprenant :
un corps de récipient comportant un boîtier (22) définissant un compartiment interne (24) et une ouverture (26) reliée au compartiment interne ;
un capuchon (32) monté sur le boîtier autour de l'ouverture, **caractérisé en ce que** le capuchon compor
te un corps se prolongeant axialement (34) pouvant être reçu à l'intérieur de l'ouverture (26) et un élément de mise en prise (82) formé à l'intérieur du corps se prolongeant axialement ; et
une soupape de décharge de pression (50) montée sur le boîtier et couplée de manière fonctionnelle au compartiment interne pour évacuer le fluide du compartiment interne, la soupape de décharge de pression présentant un élément mobile (68) mobile entre une première position et une seconde position, dans laquelle, lorsque l'élément mobile est dans la première position, l'élément mobile est configuré pour coopérer avec la fonction de mise en prise pour restreindre le mouvement du capuchon par rapport à l'ouverture.

2. Ensemble de récipient selon la revendication 1, dans lequel la soupape de surpression (50) est montée sur le boîtier (22) à une position adjacente à l'ouverture (26).

3. Ensemble de récipient selon la revendication 1 ou 2, dans lequel un axe de la soupape de surpression (50) est orienté à un angle par rapport à un axe de l'ouverture (26), ou dans lequel l'axe de la soupape de surpression est perpendiculaire à l'axe de l'ouverture.

4. Ensemble de récipient selon l'une quelconque des revendications précédentes, dans lequel lorsque l'élément mobile (68) est dans la première position, le compartiment interne (24) est sous pression, et lorsque l'élément mobile est dans la seconde position, le compartiment interne est ventilé.

5. Ensemble de récipient selon l'une quelconque des revendications précédentes, dans lequel l'élément de mise en prise (82) comporte une rainure (44) se prolongeant autour d'au moins une partie d'une périphérie du capuchon (32), et/ou dans lequel l'élément de mise en prise a une taille et une forme similaires à une partie de l'élément mobile avec lequel l'élément de mise ne prise coopère.

6. Ensemble de récipient selon l'une quelconque des revendications précédentes, dans lequel le capuchon (32) comprend également au moins un trou d'aération (86), l'au moins un trou d'aération est disposé en communication fluidique avec l'élément de mise en prise.

7. Ensemble de récipient selon l'une quelconque des revendications précédentes, dans lequel lorsque l'élément mobile (68) est dans la première position, le mouvement de rotation du capuchon (32) par rapport à l'ouverture (26) est limité.

8. Ensemble de récipient selon l'une quelconque des revendications précédentes, dans lequel la soupape de décharge de pression (50) comprend également un corps de soupape (52) présentant une première extrémité et une seconde extrémité, la première extrémité étant agencée adjacente au capuchon (32), dans lequel l'élément mobile se prolonge à travers la première extrémité à la fois dans la première position et dans la seconde position.

9. Ensemble de récipient selon l'une quelconque des revendications précédentes, dans lequel la fonction de mise en prise (68) est située au niveau d'une partie sous pression du capuchon (32), ou dans lequel la fonction de mise en prise est située au niveau d'une partie non sous pression du capuchon.

10. Procédé de retrait d'un bouchon d'un récipient d'un ensemble de récipients selon l'une quelconque des revendications précédentes, comprenant :
l'ouverture de la soupape de surpression (50) agencée en communication fluidique avec le récipient lorsque le récipient est sous pression ;
l'égalisation d'une pression à l'intérieur du récipient et une pression ambiante ;
le déverrouillage du bouchon (32) par rapport au récipient ; et la séparation du bouchon du récipient.

11. Procédé selon la revendication 10, dans lequel l'égalisation de la pression à l'intérieur du récipient et de la pression ambiante comprend également la fourniture d'un écoulement de fluide entre la soupape de surpression et le récipient.

12. Procédé selon la revendication 11, dans lequel l'égalisation de la pression à l'intérieur du récipient et de la pression ambiante comprend également l'évacuation du fluide du récipient à travers la soupape de surpression (50) lorsque le récipient est sous pression.

13. Procédé selon la revendication 12, dans lequel l'évacuation du fluide du récipient à travers la soupape de surpression (50) lorsque le récipient est sous pression comprend également l'évacuation du fluide du récipient à travers au moins un trou d'évacuation (86) formé dans le capuchon, l'au moins un trou d'évacuation étant disposés en communication fluidique avec une extrémité de la soupape de surpression, et éventuellement dans lequel l'au moins un trou d'évacuation est formé au niveau de l'élément de mise en prise.

14. Procédé selon la revendication 10, 11, 12 ou 13, dans lequel le déverrouillage du capuchon (32) par rapport au récipient comprend également la séparation d'un élément mobile (68) de la soupape de décharge de pression d'un élément de mise en prise (82) du capuchon.

15. Procédé selon l'une quelconque des revendications 10 à 14, dans lequel la séparation du capuchon (32) du récipient comprend également la rotation du capuchon pour découpler par filetage le capuchon du récipient, ou dans lequel la séparation du capuchon du récipient comprend également la rotation et la translation axiale du capuchon pour découpler le capuchon du récipient.
